Europäisches Patentamt

European Patent Office

Office européen des brevets

(19)

(11) Veröffentlichungsnummer: **0 190 616 B1**

# EUROPÄISCHE PATENTSCHRIFT

(12)

(45) Veröffentlichungstag der Patentschrift: **20.03.91**

(51) Int. Cl.⁵: **F24H 1/44**, F24H 1/28, F24H 9/14, F23L 15/04

(21) Anmeldenummer: **86100885.2**

(22) Anmeldetag: **23.01.86**

(54) **Gerät zum Erwärmen von Wasser, insb. Warmwasserheizkessel.**

(30) Priorität: **02.02.85 DE 3503535**
**15.10.85 DE 3536667**

(43) Veröffentlichungstag der Anmeldung:
**13.08.86 Patentblatt 86/33**

(45) Bekanntmachung des Hinweises auf die
Patenterteilung:
**20.03.91 Patentblatt 91/12**

(84) Benannte Vertragsstaaten:
**AT BE CH DE FR GB IT LI LU NL SE**

(56) Entgegenhaltungen:
**EP-A- 0 122 579**
**DE-A- 3 225 387**
**DE-A- 3 232 741**
**DE-A- 3 318 468**
**DE-B- 2 116 446**

(73) Patentinhaber: **Vetter, Richard**
**Schmedenstedterstrasse 9-9A**
**W-3150 Peine(DE)**

(72) Erfinder: **Vetter, Richard**
**Schmedenstedterstrasse 9-9A**
**W-3150 Peine(DE)**

(74) Vertreter: **Depmeyer, Lothar**
**Auf der Höchte 30**
**W-3008 Garbsen 1(DE)**

## Beschreibung

Die Erfindung betrifft ein Gerät zum Erwärmen von Wasser, insb. Warmwasserheizkessel, nach dem Oberbegriff des Anspruchs 1.

Nach bekannten Vorschlägen ( DE-A-3 318 468 )wird der der Kondensationskammer zugeordnete Wärmeaustauscher mit Wasser beaufschlagt. Somit ergeben sich zumindest zwei unterschiedliche Kreisläufe für die Wassererwärmung, und zwar unter Berücksichtigung der oberhalb der Kondensationskammer befindlichen Wärmeaustauscher Es versteht sich, dass bei manchen Anwendungsfällen zwei Kreisläufe nicht erforderlich sind bzw. besondere Massnahmen erfordern.

Weiterhin sind Geräte zum Erwärmen von Flüssigkeiten bekannt ( EP-A-O 122 579 bei denen der am Ausgang des Gerätes befindliche, von Verbrennungsgasen durchströmte zweite Wärmeaustauscher am Boden mit einem Auslass für Kondensat versehen ist. Über eine besondere räumliche Zuordnung der beiden Wärmeaustauscher und der Verbrennungskammer werden keine Vorschläge unterbreitet; der zweite Wärmeaustauscher ist zudem ein mit parallelen Längskanälen ausgestatteter, nach dem Gegenstromprinzip arbeitender Austauscher.

Der Erfindung liegt die Aufgabe zugrunde, die eingangs erwähnten Geräte bekannter Art so auszubilden, dass sie mit nur einem Wassereintritt und nur einem Wasseraustritt ausgestattet werden können, zugleich aber die unten gelegene Kammer als Kondensationskammer ausgeführt und weiterhin ein Wärmeaustauscher geschaffen werden kann, der chemischen Angriffen des Kondensats gewachsen ist, grosse Durchgangsquerschnitte für die Verbrennungsluft zulässt und weiterhin mit einer sich in zulässigen, engen Grenzen haltenden Erstreckung ausführbar ist.

Diese Aufgabe wird durch die Merkmale nach dem Kennzeichnungsteil des Anspruchs 1 gelöst. Vorteilhafte Weiterbildungen ergeben sich aus den Unteransprüchen.

Ein solcher Wärmeaustauscher lässt besonders grosse Durchgangsquerschnitt für die Verbrennungsluft einerseits und die Abgase ZU; er kann zudem durch Zusammenfügen von Einzelteilen aufgebaut und schliesslich sogar aus tiefgezogenen oder in anderer Weise geformten dünnwandigen Einzelteilen zusammengesetzt werden.

Weitere Einzelheiten der Erfindung werden anhand der Zeichnung erläutert, in der Ausführungsbeispiele der Erfindung dargestellt sind. Es zeigen :

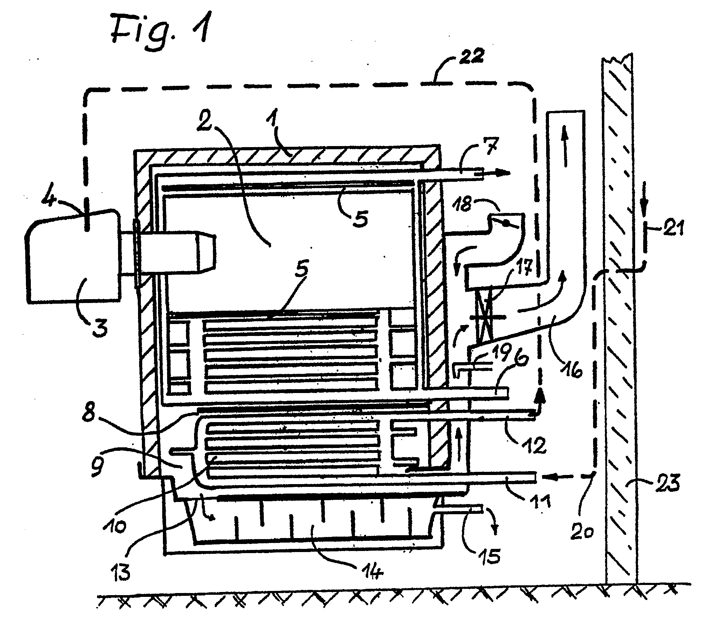

Fig. 1    einen Warmwasserkessel im senkrechten Schnitt, und zwar in schematischer Darstellung,

Fig. 2    einen Wärmetauscher für einen Warmwasserkessel im Querschnitt in einer gegenüber Fig. 1 abgewandelten Ausführung,

Fig. 3    eine Teildraufsicht auf den Wärmetauscher gemäss Fig. 2,

Fig. 4    einen Längsschnitt durch den Wärmetauscher gemäss Fig. 2 und

Fig. 5    einen Teilquerschnitt durch den Wärmetauscher gemäss Fig. 2 in vergrössertem Masstab.

Innerhalb des kastenförmigen Gehäuses 1 mit in üblicher Weise isolierten Wandungen befindet sich eine Verbrennungskammer 2, der ein Brenner 3 z.B. ein Gas- oder Ölbrenner, dem die Frischluft über einen Anschluss 4 zugeführt wird.

Der Verbrennungskammer 2 ist ein Wärmeaustauscher 5 zugeordnet, der unten einen Zulauf 6 und oben einen Ablauf 7 aufweist. Er umschliesst z.T. die Verbrennungskammer 2, erstreckt sich aber auch weiter nach unten in das Gehäuse 1. Der von dem Wärmeaustauscher 5 umschlossene Raum ist unten z.B. durch eine Isolationsplatte 8 abgeschlossen, um so im unteren Teil des Gehäuses eine Kondensationskammer für die Abgase zu schaffen, die mit 9 bezeichnet ist. Ihr ist ein eigener Wärmeaustauscher 10 zugeordnet, der einen Eintritt 11 für Frischluft und einen darüber gelegenen Austritt 12 für die erwärmte Frischluft hat.

Das in der Kondensationskammer 9 anfallende Kondensat gelangt über den Ablauf 13 in eine unterhalb des Gehäuses 1 befindliche Kammer 14, in der eine Entgiftung und dgl. stattfinden kann. Der Abfluss ist 15 bezeichnet.

Die aus der Kondensationskammer 9 anfallende Abgase gelangen über einen Abgaskanal 16 ins Freie. Innerhalb dieses Kanals befindet sich noch ein Ventilator 17, um die Abgasgeschwindigkeit beeinflussen zu können. Über einen Stutzen 18 kann dem Abgaskanal 16 noch Frischluft zugeführt werden. Auch ist es möglich, innerhalb des Abgaskanals 16 einen Wassersprücher 19 anzuordnen.

Die Frischluft wird durch eine Leitung 20 von aussen, also von einem Eintrittsstutzen 21 zugeführt, der sich ausserhalb des Raumes befindet, in dem sich der Heizungskessel befindet. Die Aüssenwand des Heizungsraumes ist mit 23 bezeichnet.

Um im Bereich des Wärmeaustauschers 5 Schadstoffe auszuschliessen, wird dieser so betrieben, dass am Ablauf die Wassertemperatur etwa 75 °C beträgt, während die Einlauftemperatur am Zulauf etwa 60 °C nicht unterschreiten soll, um auf jeden Fall Kondensationen zu vermeiden. Demgegenüber müssen in der Kondensationskammer 9 wesentlich geringere Temperaturen wirksam werden. Mit dem Einleiten der Frischluft in den Wärmetauscher 10 wird die Frischluft auf etwa 40 - 50 °C erwärmt. Dabei gelangt sie von dem Austritt 12 über eine Leitung 22 zum Anschluss 4 und damit zum Brenner 3, während die zuluft - wie beschrieben - über die Leitung 20 zu dem Eintritt 11 geführt wird.

Betreibt man den Wärmeaustauscher 10 in dieser Weise, so ergeben sich Abgastemperaturen von etwa 20 - 30°C , die auch ein Überleiten in die Kammer 14 und ein Einleiten der Abgase in einen Abgaskanal 16 ermöglichen, der aus einem Kunststoffrohr besteht.

Bei einem solchen Gerät ist nur ein Wasserkreislauf mit dem Wärmeaustauscher 5 und dem Zulauf 6 und dem Ablauf 7 vorgesehen. Der unten in der Kondensationskammer 9 befindliche Wärmeaustauscher 10 wird hingegen ausschliesslich mit der zuluft für den Brenner 3 betrieben, die noch mit Vorteil vorgewärmt wird, um so den Wirkungsgrad der Verbrennung zu verbessern.

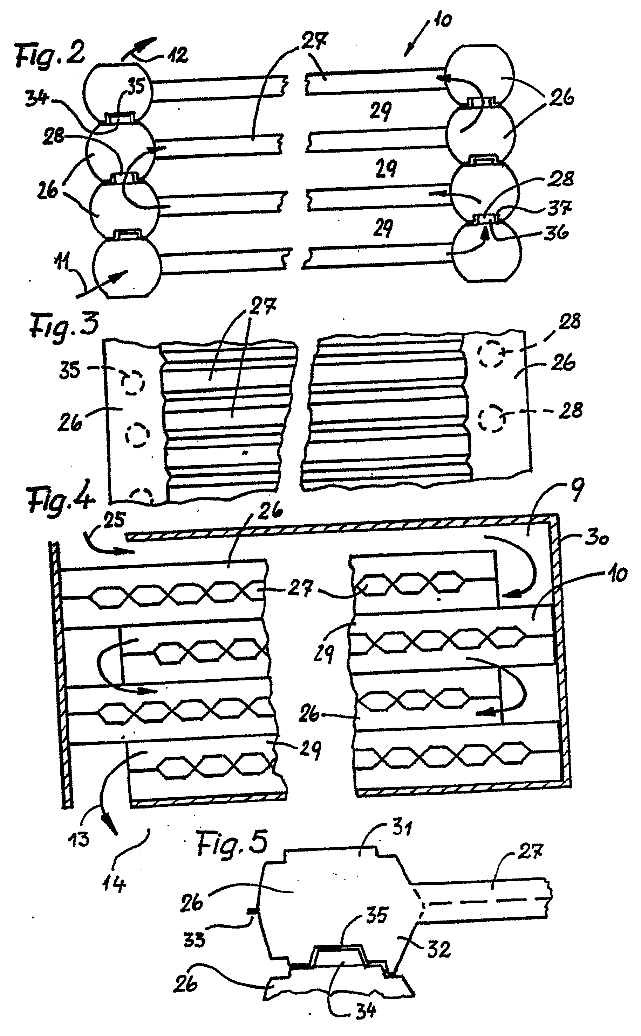

Auch in Fig. 2 - 4 ist die Kondensationskammer mit 9 bezeichnet. Der im Gerät ganz unten liegende liegende Wärmetauscher 10 hat für die Frischluft einen Eintritt 11. Die vorgewärmte und dem Brenner zuzuführende Luft verlässt den Wärmetauscher 10 über den Austritt 12. Von dort führt eine nicht näher dargestellte Leitung zum Brenner. Auch die Zuführungsleitung zum Eintritt 11 ist nicht dargestellt.

Die Verbrennungs- oder Abgase werden dem Wärmetauscher 10 hingegen im Sinne des Pfeiles 25 zugeführt, sie verlassen den Wärmetauscher 10 im Binne des Pfeiles bei 13. Von dort werden die Abgase einer Kammer 14 zugeleitet, in der die Entgiftung stattfindet.

Die über den Eintritt 11 zugeleitete Aussenluft mit einer Temperatur von etwa + 20 - - 20°C wird im Wärmetauscher 10 auf etwa 55°C vorgewärmt. Die Abgase kommen mit einer Temperatur von etwa 60 - 75°C in den Wärmetauscher und verlassen diesen mit einer Tenperatur von etwa 20 - 40°C.

Der Wärmetauscher 10 besteht im wesentlichen aus zu beiden Seiten befindlichen Längskanälen 26, die nahe und ohne Zwischenraum aufeinander liegen. Die je in einer Ebene liegenden Längskanäle 26 sind durch eine Vielzahl quer engeordneter Querkanäle 27 miteinander verbunden. Um ein Hin- und Herleiten der Frischluft in den übereinanderliegenden Querkanälen zu bewirken, stehen wechselseitig die Längskanäle 26 durch über die Länge der Längskanäle 26 verteilte angeordnete Durchbrechungen 28 in Verbindung.

Die Abgase werden ebenfalls hin und hergeführt, und zwar in parallel zu den Längskanälen 26 verlaufenden Leitungen 29 die nach oben und unten durch die fugenlos aufeinanderfolgenden Querkanäle 27 und an beiden Seiten durch die Längskanäle 26 begrenzt sind. Die übrigen Begrenzungswandung können von den Begrenzungswänden 30 des Gerätes gebildet sein.

Die Kanäle 26, 27 werden durch zusammengefügte z.B. tiefgezogene Schalen 31, 32 gebildet, die an den Rändern bei 33 mit einander verschweisst sind. Übereinanderliegende Längskanäle 26 greifen durch eine längsverlaufende Profilierung formschlüssig ineinander, zudem sind über die Kanallänge verteilte Vorsprünge 34 vorgesehen, die in entsprechende Vertiefungen 35 des benachbarten Kanals eingreifen. Dieser Formschluss befindet sich an den Seiten der Längskanäle, die untereinander nicht in Verbindung stehen. Im Bereich der Durchbrechungen 28 hingegen hat der eine Längskanal 26 einen kleinen Stutzen 36, der in ein Rohrstück 37 des anderen Längskanals 26 eingreift. Hier kann ggfs. zusätzlich noch eine Abdichtung erreicht werden, indem ein Haftungs- und/oder Klebemittel benutzt wird. Es sei noch erwähnt, dass eine grosse Anzahl der Durchbrechungen 28 vorgesehen ist, dass aber schon wenige Formschlussfixierungen in Form der Vorsprünge 34 und der Vertiefungen 35 ausreichend sind.

Vorzugsweise besteht der gesamte Wärmetauscher 10 aus einer temperaturbeständigen Folie bzw. dünnen Platte aus Kunststoff, die - wie erwähnt - tiefgezogen sein kann, um die erwähnten Kanäle 26, 27 zu erzielen. Dieser Werkstoff ist möglich, weil die herrschenden Temperaturen vergleichsweise niedrig sein. Die Wandstärke kann dabei gering sein, z.B. etwa 0.25 - 0.45 mm, im Regelfalle also unter 0.5 mm. Die Formsteifigkeit des gesamten Gebildes ist dabei durch die Profilierung aller Teile sichergestellt.

## Ansprüche

1. Gerät zum Erwärmen von Wasser, insb. Warmwasserheizkessel, mit einer Kammer (2) für heisse Gase und einem Brenner (3) , wobei diese Kammer (2) als Verbrennungskammer ausgebildet ist und zwei oder mehrere Wärmeaustauscher(5,10) vorgesehen sind, die bei oben liegender Kammer (2) übereinander liegend im Gerät angeordnet sind, und wobei sich ferner der unten liegende Wärmeaustauscher (10) in einer Kondensationskammer (9) befindet, dadurch gekennzeichnet, dass dem der Kondensationskammer (9) zugeordnete Wärmeaustauscher(10) von Frischluft durchströmt ist, die vorgewärmt dem Brenner (3) zuführbar ist, wobei dieser Wärmeaustauscher (10) auf jeder Seite mehrere übereinanderliegende Längskanäle (26) für die Luft aufweist, ein Längskanal (26) der einen Seite mit einem Längskanal (26) der anderen Seite durch eine Vielzahl von Querkanälen (27) miteinander und übereinander liegende Längskanäle (26) wechselseitig untereinander durch Durchbrechungen (28) verbunden und weiterhin die Verbrennungsgase hin und her in Richtung der Längskanäle (26) zwischen übereinander liegenden Querkanälen (27) hindurchgeführt sind.

2. Gerät nach Anspruch 1, dadurch gekennzeichnet, dass übereinander liegende Längskanäle (26) fugenlos aneinander anschliessen.

3. Gerät nach Anspruch 1, dadurch gekennzeichnet, dass benachbarte Querkanäle (27) fugenlos aneinander anschliessen.

4. Gerät nach Anspruch 1. dadurch gekennzeichnet, dass die Querkanäle (27) und die Längskanäle (26) aus zwei etwa einander entsprechenden Schalen (31,32) bestehen, deren Ränder durch Schweissen, Kleben od. dgl. verbunden sind.

5. Gerät nach Anspruch 1, dadurch gekennzeichnet, dass übereinanderliegende Länskanäle (26) formschlüssig ineinandergreifen ( Fig. 4 ).

6. Gerät nach Anspruch 5, dadurch gekennzeichnet, dass die Längskanäle (26) mit über deren Länge verteilt angeordneten Vorsprüngen am einen Längskanal (26) vesehen sind, die in Vertiefungen des anderen Längskanals (26) eingreifen.

7. Gerät nach Anspruch 1, dadurch gekennzeichnet, dass miteinander verbundene Längskanäle (26) durch einen Rohrstutzen (36) eines Längskanals (26) und ein Rohrstück (37) des anderen Längskanals (26) leitungsmässig verbunden sind, wobei der Rohrstutzen (36) in das Rohrstück (37) eingreift und über die Länge der Längskanäle (26) eine Vielzahl dieser ineinandergreifenden Elemente vorgesehen sind.

8. Gerät nach Anspruch 1, dadurch gekennzeichnet, dass der Wärmeaustauscher (10) aus einer dünnwandigen Folie oder Platte aus Kunststoff besteht, die eine Wandung hat, die vorzugsweise kleiner ist als 0.5 mm und insb. 0.25 - 0.45 mm beträgt.

9. Gerät nach Anspruch 5, dadurch gekennzeichnet, dass die einander zugekehrten Wandungen der Längskänale (26) längsverlaufende Profile bilden, die ineinandergreifen.

## Claims

1. Apparatus for heating water, more especially a hotwater heating boiler, having a chamber (2) for hot gases and a burner (3), wherein this chamber (2) is in the form of a combustion chamber, and two or more heat exchangers (5, 10) are provided which, in the case of the upper chamber (2), are disposed one above the other in the apparatus, and wherein also the lower heat exchanger (10) is situated in a condensation chamber (9), characterised in that fresh air flows through the heat exchanger (10) associated with the condensation chamber (9) and is suppliable to the burner (3) in a preheated state, this heat exchanger (10) having on each side a plurality of elongate conduits (26) lying one above the other for the air, one elongate conduit (26) of one side being connected to an elongate conduit (26) of the other side by means of a plurality of transverse conduits (27), and elongate conduits (26) situated one above the other are alternately interconnected by means of openings (28), and furthermore the combustion gases are conducted therethrough back and forth in the direction of the elongate conduits (26) between transverse conduits (27) situated one above the other.

2. Apparatus according to claim 1, characterised in that elongate conduits (26) situated one above the other are interconnected in a seamless manner.

3. Apparatus according to claim 1, characterised in that adjacent transverse conduits (27) are interconnected in a seamless manner.

4. Apparatus according to claim 1, characterised in that the transverse conduits (27) and the elongate conduits (26) are formed from two shells (31, 32), which substantially correspond to one another and the edges of which are connected by means of welding, adhesion or the like.

5. Apparatus according to claim 1, characterised in that elongate conduits (26), situated one above the other, engage in one another in a form-locking manner (Fig. 4).

6. Apparatus according to claim 5, characterised in that the elongate conduits (26) are provided with projections on one elongate conduit (26), which projections are distributed over their length and engage in recesses in the other elongate conduit (26).

7. Apparatus according to claim 1, characterised in that interconnected elongate conduits (26) are connected in a pipelike manner by means of a socket connection (36) of an elongate conduit (26) and a pipe portion (37) of the other elongate conduit (26), the socket connection (36) engaging in the pipe portion (37) and a plurality of these interengaging elements being provided over the length of the elongate conduits (26).

8. Apparatus according to claim 1, characterised in that the heat exchanger (10) is formed from a thin-walled film or plate of plastics material which has a wall which is preferably smaller than 0.5 mm and is, more especially, 0.25 - 0.45 mm.

9. Apparatus according to claim 5, characterised in that the walls of the elongate conduits (26) facing one another form longitudinally extending profiles which engage in one another.

**Revendications**

1. Appareil pour chauffer de l'eau, notamment chaudière de chauffage à eau chaude, comprenant une chambre (2) pour des gaz chauds et un brûleur (3) cette chambre (2) étant constituée en chambre de combustion, et il est prévu deux ou plusieurs échangeurs de chaleur (5, 10) qui, lorsque la chambre (2) se trouve au-dessus, sont disposés l'un au-dessus de l'autre dans l'appareil, l'échangeur de chaleur (10) situé en bas se trouvant, en outre, dans une chambre de condensation (9), caractérisé en ce que l'échangeur de chaleur (10) associé à la chambre de condensation (9) est parcouru par de l'air frais qui peut être envoyé, en étant préchauffé, au brûleur (3), cet échangeur de chaleur (10) présentant de chaque côté plusieurs canaux longitudinaux (26) superposés, destinés à l'air, un canal longitudinal (26) d'un côté communiquant avec un canal longitudinal (26) de l'autre côté, par un grand nombre de canaux transversaux (27), et des canaux longitudinaux (26) superposés communiquant alternativement entre eux par des passages (28) et, en outre, les gaz de combustion passent dans un sens et dans l'autre, dans la direction des canaux longitudinaux (26) entre des canaux transversaux (27) situés l'un au-dessus de l'autre.

2. Appareil suivant la revendication 1, caractérisé en ce que des canaux longitudinaux (26), se trouvant l'un au-dessus de l'autre, sont raccordés l'un à l'autre sans intervalle

3. Appareil suivant la revendication 1, caractérisé en ce que les canaux transversaux (27) voisins sont raccordés l'un à l'autre sans intervalle.

4. Appareil suivant la revendication 1, caractérisé en ce que les canaux transversaux (27) et les canaux longitudinaux (26) sont constitués de deux coquilles (31, 32) qui se correspondent et dont les bords sont reliés par soudage, par collage ou par un procédé analogue.

5. Appareil suivant la revendication 1, caractérisé en ce que des canaux longitudinaux (26), disposés l'un au-dessus de l'autre, s'emboîtent l'un dans l'autre par complémentarité de formes (figure 4).

6. Appareil suivant la revendication 5, caractérisé en ce que les canaux longitudinaux sont munis de parties saillantes réparties sur leur longueur, qui sont prévues sur l'un des canaux longitudinaux (26) et qui pénètrent dans des cavités de l'autre canal longitudinal (26).

7. Appareil suivant la revendication 1, caractérisé en ce que des canaux longitudinaux (26) communiquant entre eux communiquent, par une tubulure (36) d'un canal longitudinal (26) et par une pièce tubulaire (37) de l'autre canal longitudinal (26), la tubulure (36) pénétrant dans la pièce tubulaire (37) et un grand nombre de ces éléments, qui pénètrent l'un dans l'autre, étant prévu sur la longueur des canaux longitudinaux (26).

8. Appareil suivant la revendication 1, caractérisé en ce que l'échangeur de chaleur (10) est constitué d'une feuille ou d'une plaque en matière plastique à paroi mince qui a une paroi inférieure, de préférence, à 0,5 mm et notamment comprise entre 0,25 et 0,45 mm.

9. Appareil suivant la revendication 5, caractérisé en ce que les parois des canaux longitudinaux (26), qui sont tournées l'une vers l'autre, ont des profilés longitudinaux qui pénètrent les uns dans les autres.

# Fig. 1

Fig. 2

Fig. 3

Fig. 4

Fig. 5